# EUROPEAN PATENT APPLICATION

(11) **EP 1 744 385 A1**
(43) Date of publication of application: **17.01.2007**
(21) Application number: 06014706.3
(22) Date of filing: 14.07.2006
(51) Int. Cl.: H01M 2/10, H01M 2/30

(54) **Support structure of power supply system**

(30) Priority: 15.07.2005 JP 2005207505
(71) Applicant: FUJI JUKOGYO KABUSHIKI KAISHA, Tokyo (JP)
(72) Inventor: Sakurai, Masato, Tokyo (JP)
(74) Representative: Vossius & Partner

(57) **Abstract**

Frame bodies for fixing a module in which cells are laminated are arranged around a support holder. A support shaft is attached in a center of the support holder through a bearing. A whole of the frame bodies and the support holder are supported by this support shaft. Hereby, it is possible to reduce inputs of vibration, shock and torsion from the mounting side. The frame body in which heavy cells are arranged is movable relative to the mounting side. As a result, it is possible to distribute and reduce the vibration and the torsion effectively. When the power supply system is mounted on a vehicle, it is possible to distribute and reduce the vibration and the shock inputted through a vehicle body, and to reduce an influence of torsion applied to the vehicle body, whereby stable electric power can be supplied.

## Description

The present application claims foreign priority based on Japanese Patent Application No. P.2005-207505, filed on July 15, 2005, the contents of which are incorporated herein by reference.

The present invention relates to a support structure of a power supply system including a plurality of cells that store or generate electrical energy.

Recently, development of a substantially rectangular storage cell with a plane and flat shape, for example, a lithium ion secondary cell, an electric double layer condenser, and the like; and a generator cell such as a fuel cell which directly transforms chemical energy of a fuel into electric energy, particularly including a proton-exchange membrane fuel cell which separates an anode electrode and a cathode electrode by an ion exchange film, has been advanced. The cells are expected as electric power sources for various devices from viewpoints of height in energy density and compactness.

Such the storage cell or the generator cell is frequently used as a packaged battery pack in which a predetermined numbers of cells are housed in a case under connection to each other corresponding to voltage specification or capacity specification. The battery pack increases in its weight and its volume. Therefore, when the battery pack is mounted as a power supply system on a hybrid electric vehicle or an electric vehicle, it is important to suitably lay out the heavy power supply system in the vehicle.

Disclosed in JP-2001-105893 is an electric vehicle including a power unit composed of a motor and a transmission, and a battery unit in which a plurality storage cells are integrated to drive the motor, in which the power unit is arranged at a back of a seat, and each storage cell in the battery unit is arranged near a vehicle rotation center and in a low position.

When a power supply system that is a heavy object is mounted in a vehicle, it is necessary to take not only a layout of the power supply system but also durability for vibration and shock applied from a vehicle body into consideration. Particularly, when the power supply system is mounted on a vehicle such as a hybrid electric vehicle or an electric vehicle, in addition to the vibration and the shock, torsion applied to the vehicle body may affect the storage cell and the generator cell, so that there is fear that disadvantage will arise. Therefore, in a conventional vehicle, a case for housing the storage cell or the generator cell is firmly made to an excessive degree, so that a total weight and volume of the power supply system is increased.

One or more embodiments of the present invention provide a support structure of a power supply system in which it is possible to distribute and reduce vibration and shock from a power supply system mounting side, and to reduce influences of torsion of the mounting side, whereby reliability and durability can be improved.

In accordance with one or more embodiments of the present invention, a support structure of a power supply system including a plurality of cells is provided with: a frame body in which the cells are arranged; a support shaft that supports the frame; and a bearing structure that support the support shaft at an outside of the frame body. The frame body is movable relative to at least one of the support shaft and the bearing structure.

Further, the support shaft may be circular or polygonal and may protrude from the frame body.

Further, the frame body may include a framing member, and a part of the framing member may serve as the support shaft.

Further, the bearing structure may support at least one of end portions of the support shaft.

Further, a shock absorber arranged at least around the support shaft or on the bearing structure may be provided.

Further, a balancer may be provided, and the balance limits a movement of the frame body relative to at least one of the support shaft and the bearing structure, and corrects a mounting balance of the frame body.

According to one or more embodiments of the present invention, in the power supply system, it is possible to distribute and reduce the vibration and the shock from the power supply system mounting side, and to reduce influences of torsion of the mounting side, whereby the cell is protected, and reliability and durability can be improved.

Other aspects and advantages of the invention will be apparent from the following description and the appended claims.

Fig. 1 (a) is a front view illustrating a support structure of a power supply system according to a first exemplary embodiment of the invention.

Fig. 1 (b) is a side view illustrating the support structure according to the first exemplary embodiment.

Fig. 2 is an explanatory view showing an installation example of a package in the power supply system.

Fig. 3 is an explanatory view showing another installation example of the package in the power supply system.

Fig. 4 is a front view showing an example in which the support structure is applied to a storage package.

Fig. 5 is a cross sectional view seen from a direction of an arrow A in Fig. 4.

Fig. 6 is a front view showing a modified example of the storage package.

Fig. 7 is a front view showing another modified example of the storage package.

Fig. 8(a) is a front view of a support structure of a power supply system according to a second exemplary embodiment of the invention.

Fig. 8 (b) is a side view of the support structure according to the second exemplary embodiment.

Fig. 9 (a) is a front view of an another support structure according to the second exemplary embodiment.

Fig. 9(b) is a side view of the another support structure.

Fig. 10(a) is a front view showing a first example in which a part of framing members is used as a support shaft.

Fig. 10(b) is a side view showing the first example.

Fig. 11(a) is a front view showing an example in which an abutment and a balancer are used.

Fig. 11(b) is a side view showing the example in which the abutment and the balancer are used.

Fig. 12(a) is a front view showing an example in which a stabilizer bar and a bush are used.

Fig. 12(b) is a side view showing the example in which the stabilizer bar and the bush are used.

Fig. 13 is an explanatory view showing attachment of a bush.

Figs. 14(a) is a front view showing an example in which a balancer pin is applied to the stabilizer bar.

Figs. 14(b) is a side view showing the example in which the balancer pin is applied to the stabilizer bar.

Figs. 15(a) is a front view showing a second example in which a part of framing members is used as a support shaft.

Figs. 15(b) is a side view showing the second example in which the part of the framing members is used as the support shaft.

Figs. 16(a) is a front view showing a third example in which a part of framing members is used as a support shaft.

Figs. 16(b) is a side view showing a third example in which the part of the framing members is used as the support shaft.

Exemplary embodiments of the invention will be described with reference to the accompanying drawings.

The exemplary embodiments of the invention are applied to a power supply system which is composed of a plurality of cells which store or generate electric energy. As such the cells, there are, for example, a storage cell such as a lithium ion secondary cell, an electric double layer capacitor or the like, and a generator cell such as a fuel cell. Hereinafter, the storage cell and the generator cell will be described generically as an "electric cell". A power supply system using this electric cell is mounted on, for example, an electric vehicle (EV), a hybrid electric vehicle (HEV), a fuel cell vehicle (FCV), or the like.

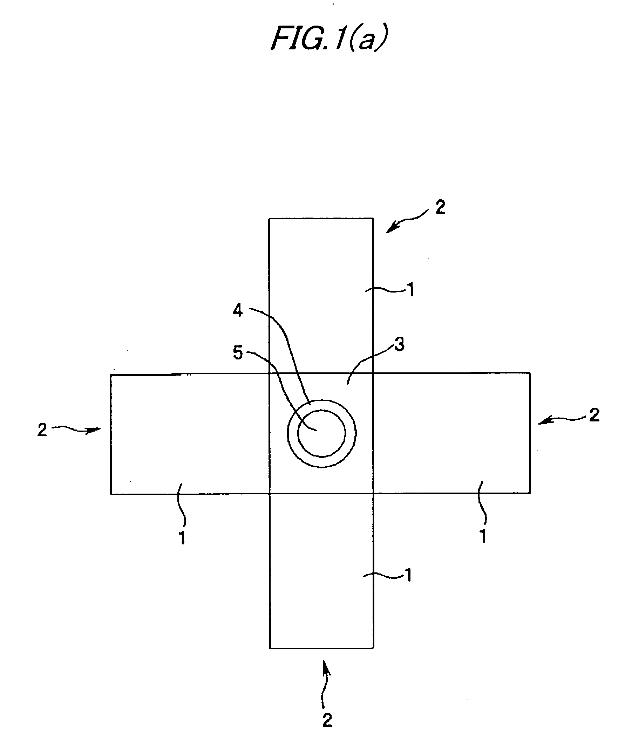

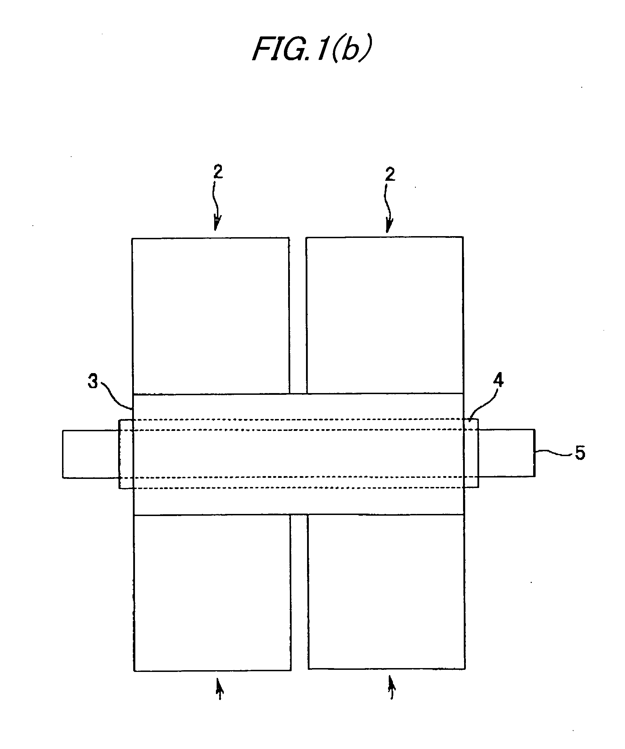

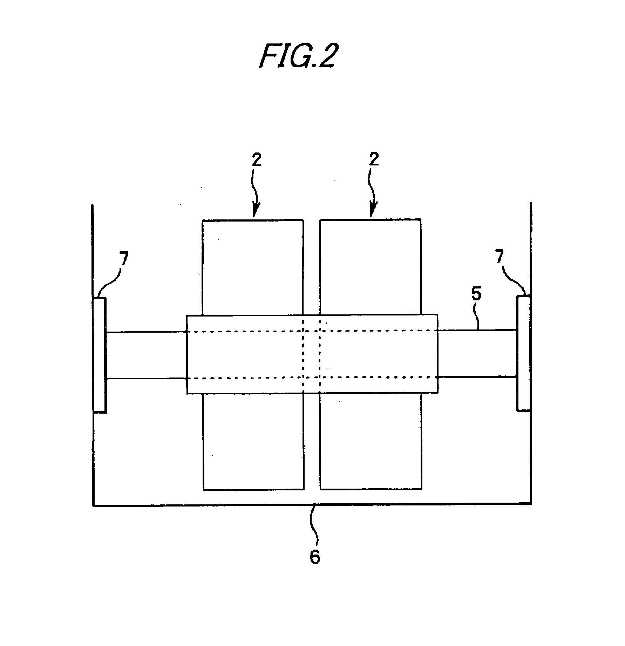

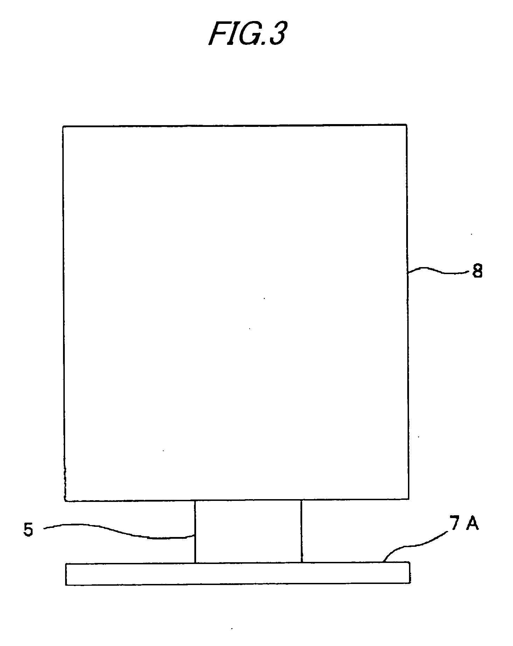

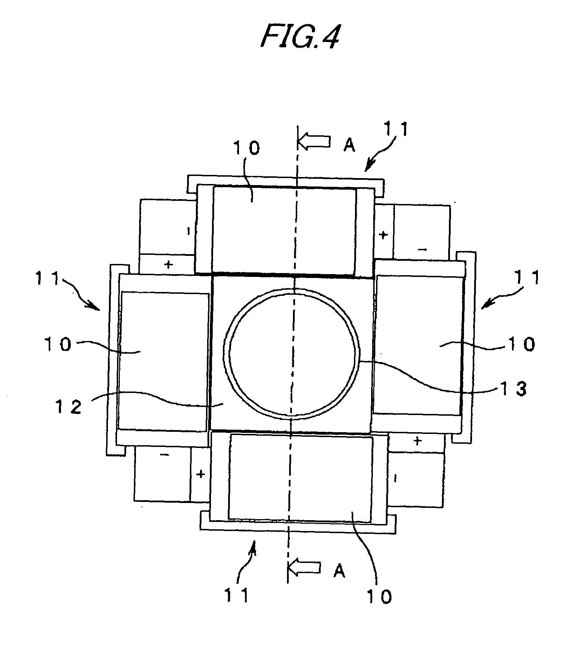

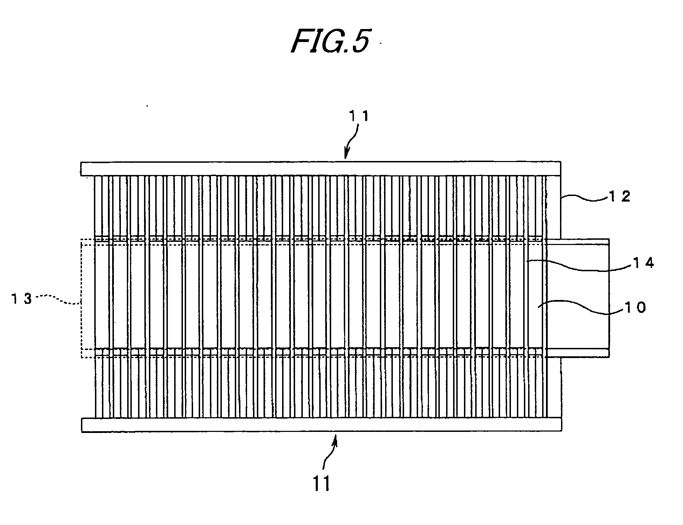

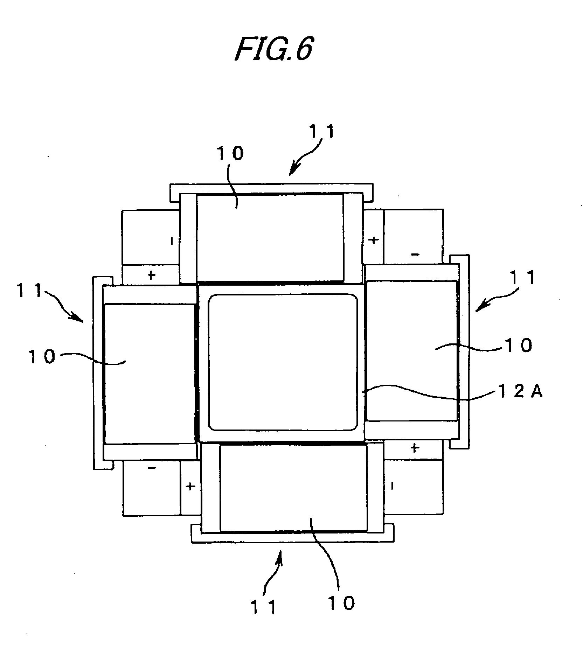

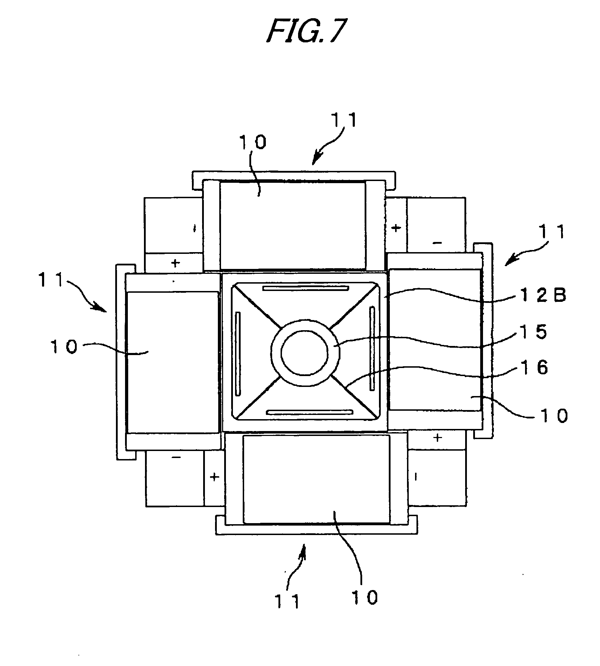

Figs. 1(a) to 7 relate to a first exemplary embodiment of the invention, in which Figs. 1(a) and 1(b) are explanatory views showing a support structure of a power supply system, Fig. 2 is an explanatory view showing an installation example of a package, Fig. 3 is an explanatory view showing another installation example of the package, Fig. 4 is a front view showing an example in which the invention is applied to a storage package, Fig. 5 is a diagram seen in the direction of an arrow A in Fig. 4, Fig. 6 is a front view showing a modified example of a storage package, and Fig. 7 is a front view showing another modified example of the storage package.

As shown in Figs. 1 (a) and 1 (b), the predetermined numbers of electric cells 1 are laminated and modularized (or stacked), and frame bodies 2 which fix each module are radially arranged around a support holder 3. In this example, as shown in a front view of Fig. 1(a), the frame bodies 2 are arranged around the square pillar-shaped support holder 3 crosswise; and in a side view of Fig. 1(b), two blocks of the frame bodies are arranged in the longitudinal direction.

To a center portion of the support holder 3, a support shaft 5 is attached through a bearing 4, and this support shaft 5 supports the whole of the frame bodies 2 and the support holder 3. The support shaft 5 is formed of a member that is circular in section and has high rigidity, and can be arranged relatively movably in relation to the support holder 3 by a sliding produced between the support shaft 5 and the bearing 4.

In case that the frame bodies 2 and the support holder 3 are installed, for example, as shown in Fig. 2, both ends of the support shaft 5 are supported by a bearing structure 6 through receiving members 7. The bearing structure 6 may be formed as a part of an installation surface on the side where the whole of the frame body 2 and the support holder 3 is mounted as the power supply system, and the bearing structure 6 has the structure in which a sliding is produced between the support shaft 5 and the receiving member. Further, the bearing structure 6 can be formed as a case of the power supply system case the frame body 2 and the support holder 3, and the bearing structure 6 as the case of the power supply system may be fixed onto the installation surface on the power supply system mounting side.

In such the support structure, the frame body 2 in which the electric cells 1 are arranged is received by the both ends of the support shaft 5, whereby inputs of vibration, shock, torsion, and the like from the mounting side are reduced. Further, since the frame body 2 in which the plural electric cells that are heavy matters are arranged is relatively movable for the mounting side, the vibration and the shock can be effectively distributed and reduced. Particularly, in case that the power supply system is mounted on a vehicle such as an electric car or a hybrid car, the vibration and the shock inputted through the vehicle body to the power supply system can be distributed and reduced, and the influence of torsion applied onto the vehicle body can be reduced, so that a stable electric power can be supplied.

In this case, in order to make the relative movement of the frame 2 for the mounting side possible, it is good that the support shaft 5 is relatively removable with the sliding for at least one of the support holder 3 and the bearing structure 6, and the support shaft 5 may be fixed to the support holder 3 or formed integrally with the support holder 3 thereby to be put in the rigid state. Further, the support shaft 5 may be not only the circular pillar having the circular section but also a square pillar having a polygonal section. In case that the support shaft 5 is the square pillar, play of slight gap may be provided in fitting to the support holder 3. Further, by providing play between the end portion of the support shaft 5 and the receiving member 7 of the bearing structure 6, the support shaft 5 may be fitted and fixed into the support holder 3, or may be formed integrally with the support holder 3.

Further, as shown in Fig. 3, one end of the support shaft 5 may be extended from a case 8 representing the whole of the frame body 2 and the support holder 3, and its end of the support shaft 5 may be received by a receiving member 7A provided on the mounting surface to install the case 8 upright. In this case, though the case 8 is supported under cantilevered construction, the vibration can be reduced by means of inertial mass of the plural electric cells 1.

Figs. 4 and 5 show an example in which a flat storage cell 10 having nearly rectangular plane such as a lithium ion secondary cell or an electric double layer capacitor is packaged as an electric cell 1. In this package, surface pressure lamination type frame bodies 11 in which the storage cells 10 are laminated upon reception of a constant pressure (surface pressure) are arranged around a support holder 12 crosswise.

The support holder 12 has in its center a cylindrical protruding part, and a support shaft 13 is inserted into this cylindrical protruding part. A hollow portion of the support shaft 13 is available as a path for cooling wind or wiring space. Further, between the respective layers of the storage cells 10, a rectangular plate-shaped heat transfer material 14 for heat transfer and heat radiation is arranged so as to come close to the cell laminated surface. The heat transfer material 14 transfers and radiates the heat generated in the storage cell 10 thereby to perform the functions of improving the heat radiation of the storage cell 10, equalizing and smoothing the surface pressure of the laminated surface, and reinforcing rigidity of the package whole.

In Fig. 6, the support holder 12 of the package shown in Figs. 4 and 5 is formed into a support holder 12A having a rectangular hollow portion. The support holder 12A may be extended as a rectangular support shaft, or a square pillar-shaped support shaft of another member may be inserted into the support holder 12A. Further, in Fig. 7, in the support holder 12A of Fig. 6, a support shaft 15 is provided, and this support shaft 15 is reinforced with support parts 16 arranged diagonally.

As described above, according to the embodiment, the frame body in which the electric cells are arranged is supported relatively movably in relation to the mounting side. Hereby, it is possible to distribute and reduce vibration, shock, and torsion from the mounting side, and to prevent various disadvantages due to the vibration, the shock, and the torsion such as poor electric connection between the respective cells, deterioration of cell, unevenness in generation power of each cell, whereby reliability and durability can be improved and the electric power of stable quality can be supplied.

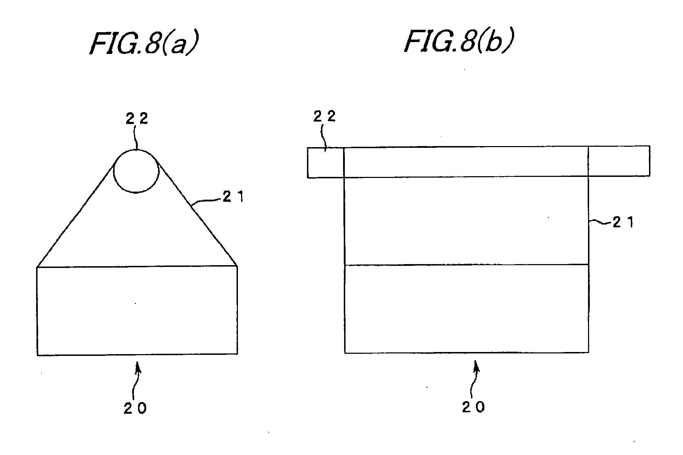

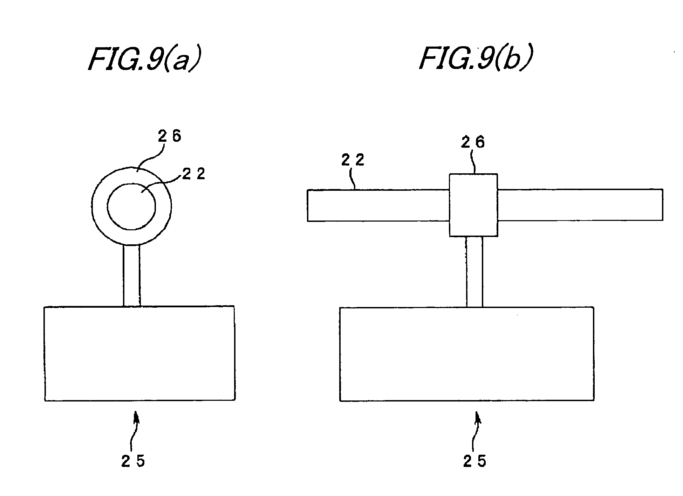

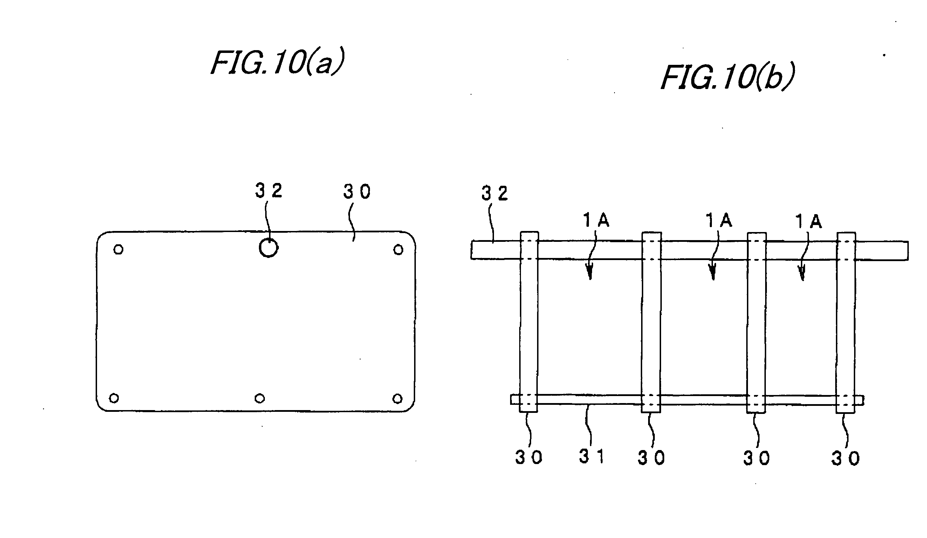

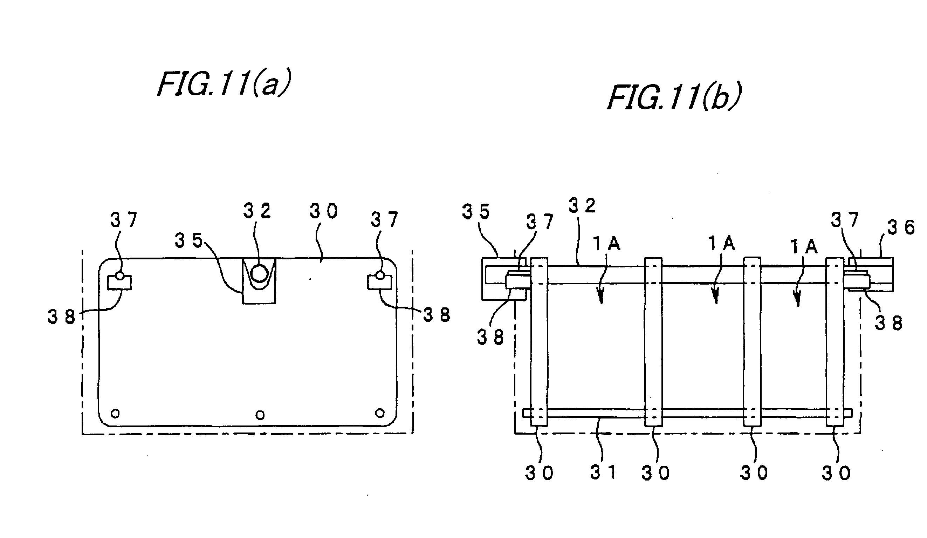

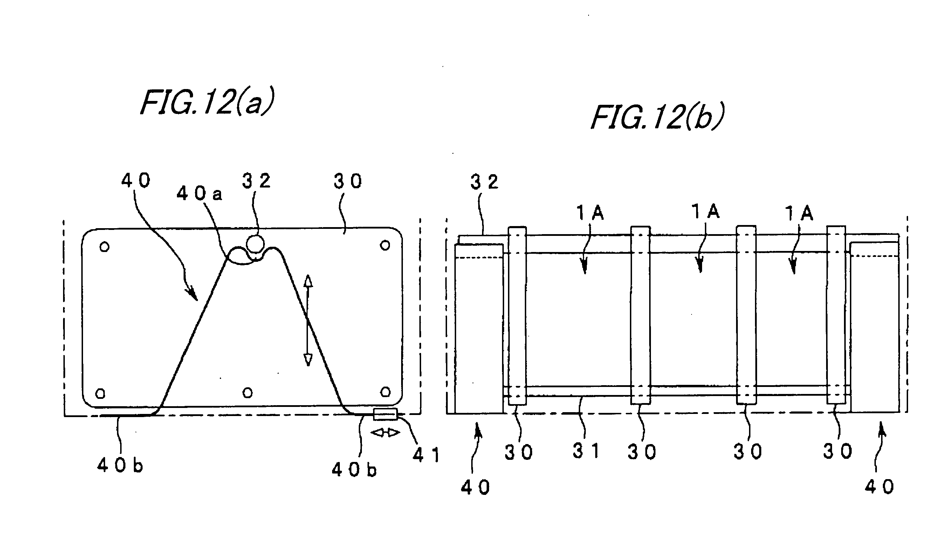

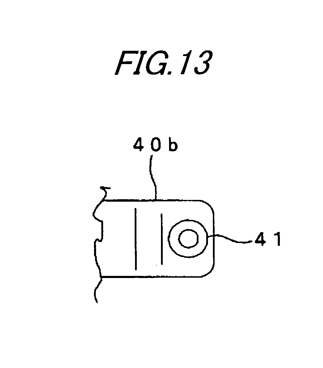

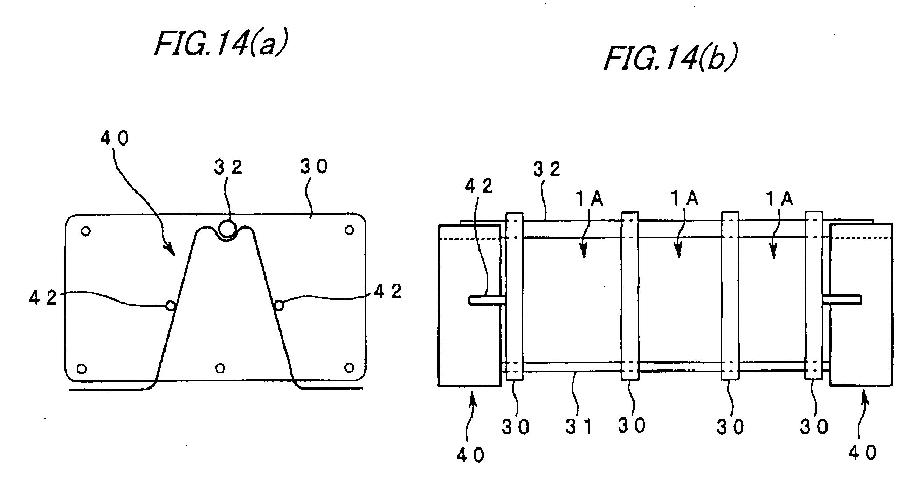

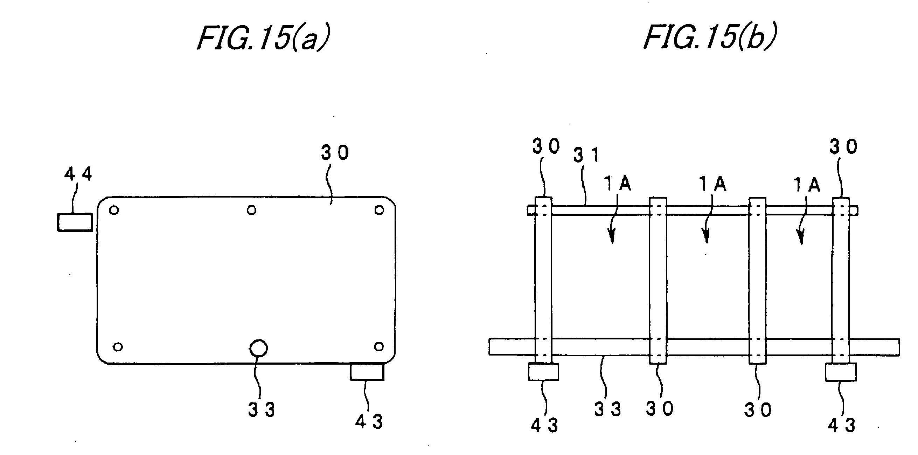

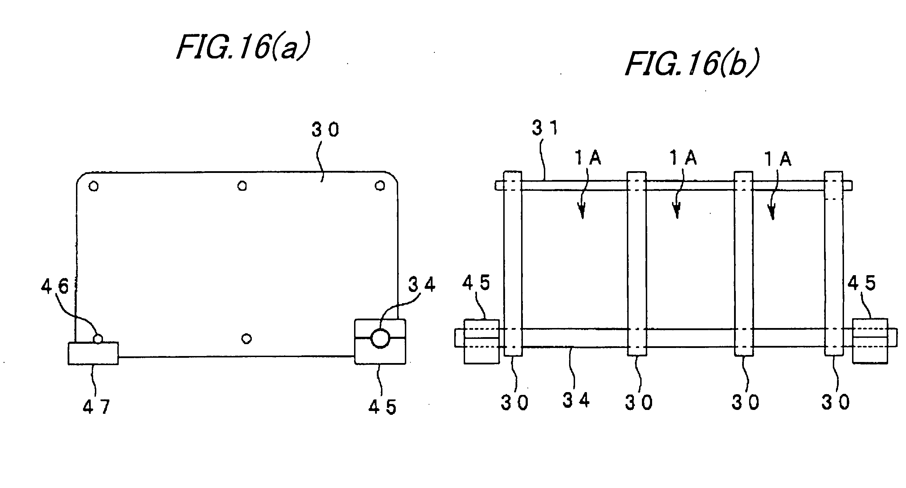

A second exemplary embodiment of the invention will be described. Figs. 8 to 16 relate to the second exemplary embodiment of the invention, in which Figs. 8(a) and 8(b) are explanatory views showing a support structure of a power supply system, Figs. 9 (a) and 9 (b) are explanatory views showing another support structure of the power supply system, Figs. 10(a) and 10(b) are explanatory views showing a first example in which a part of framing members is used as a support shaft, Figs. 11 (a) and 11 (b) are explanatory views showing a mounting example in which an abutment and a balancer are used, Figs. 12(a) and 12(b) are explanatory views showing a mounting example of the power supply system in which a stabilizer bar and a bush are used, Fig. 13 is an explanatory view showing attachment of the bush, Figs. 14(a) and 14(b) are explanatory views showing an example in which a balancer pin is applied to the stabilizer bar, Figs. 15(a) and 15(b) are explanatory views showing a second example in which a part of framing members is used as a support shaft, and Figs. 16(a) and 16(b) are explanatory views showing a third example in which a part of framing members is used as a support shaft.

In the second exemplary embodiment, a package forming a power supply system is supported at a position apart from a center portion of the package by the predetermined distance. Figs. 8(a), 8(b) and 9(a), 9(b) show basic support structures of the power supply system.

Figs. 8(a) and 8(b) show a support structure in which a frame body 20 in which electric cells 1 are arranged is suspended by a support shaft 22 through an engagement member 21. Further, Figs. 9 (a) and 9 (b) show a support structure in which a hook-like engagement part 26 is provided for a part of a frame body 26 and a support shaft 22 is inserted into this engagement part 26. Herein, the support shaft 22 can be used also as a framing member forming a part of a frame of the frame body 25. Further, the support shaft 22 may be not only circular pillar-shaped but also square pillar-shaped.

In such the support structures, the frame body 20, 25 is pivotally supported by the support shaft 22 or a mounting side reception part which receives the support shaft 22. Therefore, similarly to the case in the first exemplary embodiment, influences of vibration, shock and torsion from the mounting side can be effectively reduced, and the electric cells 1 can be protected.

There are specifically various examples to which such the support structures are applied. Figs. 10(a) to 16(b) show representative applied examples.

First, in an example shown in Figs. 10(a) and 10(b), a package constituting the power supply system is composed of plural plate-shaped plates 30 which form a rectangular frame surface as shown in a front view of Fig. 10(a), and are arranged with space as shown in a side view of Fig. 10(b). Plural pillar-shaped frame supports 31 are inserted into peripheral edge portions of each plate 30 to form a frame. Between the respective plates 30, a module 1A in which plural electric cells 1 are laminated and arranged in line is arranged.

Each plate 30 comes into contact with a laminated surface of each module 1A thereby to hold the electric cells 1 between the plates 30, and has a function of transferring and radiating the heat generated in the electric cell 1 thereby to perform the functions of improving the heat radiation of the electric cell 1, equalizing and smoothing the surface pressure of the laminated surface, and reinforcing rigidity of the package whole by the frame formed by the frame supports 31.

Further, of the plural frame supports 31 forming the frame of the package, a frame support 31 inserted into a center upper portion of the plate 30 is formed larger in diameter than the other frame supports 31, protruded from the plates 30 that become front and back outer faces, and is used as a support shaft 32 which supports the package whole at the position apart from a center of the package.

This support shaft 32, as shown in a front view of Fig. 11(a), is pivotally supported at its both ends by abutments 35 and 36 provided on the mounting side with a sliding. One 35 of the abutments has a reception surface having an opening upper portion into which the end portion of the support shaft 32 is inserted, and the other 36 is, as shown in a side view of Fig. 11(b), formed as a cylindrical bush into which the end portion of the support shaft 32 is inserted. The abutments 35 and 36 may be formed in the same shape.

On both sides of the support shaft 32, pins 37 provided upright for the plate 30 are arranged, and each pin 37 is brought into contact with a balancer 38 having elasticity. The balancer 38 is a shock absorber which limits the relative movement for the mounting side because of vibration, shock, and torsion inputted from the mounting side and corrects mounting balance. By varying the span between the support shaft 32 and the pin 37, coefficient of damper for inputs of the vibration, shock, and torsion and spring constant can be adjusted.

Figs. 12 (a) and 12 (b) show an example in which a stabilizer bar 40 having also the function of the shock absorber similarly to the balancer 38 is used in place of the abutment 35, 36. As shown in a front view of Fig. 12 (a) and a side view of Fig. 12(b), the stabilizer bar 40 is formed nearly in the shape of a triangle having a bottom portion opened by bending a plate-shaped elastic member. At the top of the stabilizer bar 40, a recess part 40a for supporting pivotally the support shaft 32 with a sliding is formed. From the bottom portion of the stabilizer bar 40, leg parts 40b, 40b are extended to both side, one of which is fixed on an installation surface of the mounting side, and the other of which is pressed on the installation surface through a ring-shaped bush 41 (refer to Fig. 13) composed of an elastic member.

Since the support shaft 32 supporting the package whole is received through this stabilizer bar 40, input components in the up-and-down direction of the vibration and the shock are absorbed by up-and-down strain of the stabilizer bar 40, and the input components in the lateral direction thereof can be absorbed by the bush 41. Further, regarding input component in the torsion direction, by the strain of the stabilizer bar 40 and the bush 41 in addition to the pivot movement by a sliding between the stabilizer bar 40 and the support 32, the influence of the torsion can be suppressed more effectively.

In this case, as shown in a front view of Fig. 14(a) and a side view of Fig. 14(b), in place of the bush 41, balance pins 42, 42 which come into contact with slant surfaces of the stabilizer bar 40 may be provided upright for the plate 30. Also by this combination of the stabilizer bar 40 and the balance pins 42, 42, the vibration, the shock, and the torsion inputted from the mounting side can be similarly attenuated effectively.

On the other hand, in an example shown in a front view of Fig. 15(a) and a side view of Fig. 15(b), of plural frame supports 31 forming a frame of a package, a frame support 31 inserted into a center lower portion of a plate 30 is formed larger in diameter than the other frame supports 31, protruded from the plates 30 that become front and back outer faces, and is used as a support shaft 33 which supports the package whole.

In this case, balancers 43 and 44 similar to the balancer 38 are used to correct mounting balance for vibration, shock, and torsion. One 43 of the balancers is arranged on the downside of the plate 30 on the support shaft 33 side, and in the predetermined position such as a front or back position in the longitudinal direction. Further, the other balancer 44 is arranged on a side surface of the plate 30 located diagonally above the balancer 43, and in the predetermined position such as a front or back position in longitudinal direction.

Further, in an example shown in a front view of Fig. 16 (a) and a side view of Fig. 16(b), of plural frame supports 31 forming a frame of a package, a frame support 31 inserted into a lower side portion of a plate 30 is formed larger in diameter than the other frame supports 31, protruded from the plates 30 that become front and back outer faces, and may be used as a support shaft 34 which supports the package whole. The support shaft 34 is supported by a bearing 45 which is arranged on the mounting side and divided up and down, and a balancer 47 similar to the balancer 38 is arranged between the installation surface and a pin 46 provided upright for the lower portion of the plate 30 with the predetermined span for the support shaft 34, thereby to correct mounting balance for vibration, shock and torsion.

Also in the second exemplary embodiment of the invention, similarly to the case in the first exemplary embodiment, the vibration, the shock, and the torsion from the mounting side are effectively distributed and reduced, whereby the disadvantage can be previously prevented. In the second exemplary embodiment, the shock absorber which limits the relative movement for the mounting side and corrects the mounting balance is used, whereby the damping effects for the vibration, the shock and the torsion can be improved more.

It will be apparent to those skilled in the art that various modifications and variations can be made to the described preferred embodiments of the present invention without departing from the spirit or scope of the invention. Thus, it is intended that the present invention cover all modifications and variations of this invention consistent with the scope of the appended claims and their equivalents.

## Claims

1. A support structure of a power supply system, the power supply system including a plurality of cells, the support structure comprising:
a frame body in which the cells are arranged;
a support shaft that supports the frame; and
a bearing structure that support the support shaft at an outside of the frame body, wherein the frame body is movable relative to at least one of the support shaft and the bearing structure.

2. The support structure according to claim 1, wherein the support shaft is circular or polygonal and protrudes from the frame body.

3. The support structure according to claim 1, or 2, wherein the frame body comprises a framing member, and a part of the framing member serves as the support shaft.

4. The support structure according to claim 1,2, or 3, wherein the bearing structure supports at least one of end portions of the support shaft.

5. The support structure according to claim 1, 2, 3 or 4, further comprising:
a shock absorber arranged at least around the support shaft or on the bearing structure.

6. The support structure according to claim 1, 2, 3, 4, or 5, further comprising:
a balancer that limits a movement of the frame body relative to at least one of the support shaft and the bearing structure, and corrects a mounting balance of the frame body.
